Europäisches Patentamt

(19) European Patent Office

Office européen des brevets

(11) Publication number: **0 066 560**
**B1**

(12) **EUROPEAN PATENT SPECIFICATION**

(45) Date of publication of patent specification: **16.01.85**

(21) Application number: **82850091.8**

(22) Date of filing: **29.04.82**

(51) Int. Cl.⁴: **C 09 J 3/16,** C 08 L 61/20, C 08 L 61/02

(54) **A method for bonding wood.**

(30) Priority: **15.05.81 SE 8103076**

(43) Date of publication of application:
**08.12.82 Bulletin 82/49**

(45) Publication of the grant of the patent:
**16.01.85 Bulletin 85/03**

(84) Designated Contracting States:
**AT BE DE FR NL**

(56) References cited:
**FR-A-2 249 100**

**PATENTS ABSTRACTS OF JAPAN, vol.5, no.75,
May 19, 1981, page 747 C 55**

(73) Proprietor: **AB CASCO
Box 11010
S-100 61 Stockholm (SE)**

(72) Inventor: **Perciwall, Evert Wilford
Längpannestigen 21
S-125 33 Älvsjö (SE)**

(74) Representative: **Schöld, Zaid
c/o KemaNobel AB Patents Box 11065
S-100 61 Stockholm (SE)**

Courier Press, Leamington Spa, England.

## Description

The present invention relates to a method for bonding wood and wood based materials using curable amino-formaldehyde resins. According to the invention the bonding is carried out in the presence of a ketone-formaldehyde resin. The invention also relates to a composition for use in the method.

Curable amino-formaldehyde resins are used in the production of composite wood products, e.g. in bonding laminated parquet flooring and for veneering of plywood. The bonding can be carried out either under cold or hot conditions but generally heat is used to accelerate the curing and reduce the press time. The heat can be applied in a hot press or by using high-frequency heating.

In many cases it is difficult to achieve a satisfactory wetting and penetration of the adhesive and, thus, satisfactory resulting strength of the composite product. In so-called high-frequency bonding the heat is supplied to the joint very rapidly and this, in combination with the fast curing system, results in an insufficient flow and anchorage of the adhesive in the wood and thus brings about an impaired strength of the product. Problems of a similar kind are also experienced in bonding old wood surfaces. An oxidized layer is formed on these and this layer impairs the wetting and penetration and thereby leads to a reduced resulting strength of the product.

Some attempts have been made to try to improve the wetting of the amino resins by means of surface active agents but the effect has been small or poor.

According to the present invention it has been found that problems of the type described above can be solved by carrying out the bonding in the presence of a ketone-formaldehyde resin. These resins give the adhesives a wetting effect and improves the penetration of the adhesives and thus give a considerable improvement of the resulting strength of the bonded products. Dense wood materials and materials which are difficult to bond can with very good results be bonded using a ketone-formaldehyde resin according to the invention.

Ketone-formaldehyde resins have previously been used in combination with amino-formaldehyde resins. JP—A—5624474 discloses an adhesive curable by alkali useful for adhesion of a molded article of alkaline inorganic material. The adhesive is a blend of an amino-resin precondensate with a ketone resin. FR—A—2 248 100 discloses a specific ketone-resin, cyclohexanone resin, as modifying agent for amino-formaldehyde resins, and especially for melamine-formaldehyde resins. The modified resin is used for impregnating and coating carrier webs, such as paper webs.

The present invention thus relates to a method for bonding wood and wood products using amino-formaldehyde resins and a curing agent, the bonding being carried out in the presence of at least 1 per cent by weight of a ketone-formaldehyde resin, as dry on dry amino-formaldehyde resin.

The term amino-formaldehyde resins is herein used for urea-formaldehyde condensation products, co-condensates of urea, melamine and formaldehyde and mixtures of urea-formaldehyde resins and melamine-formaldehyde resins. The adhesives, the resins, can be used as such or with conventional additives such as thickeners, fillers, buffering agents etc. Urea-formaldehyde resins are preferred and they suitably have a mole ratio of urea to formaldehyde within the range 1:1.3 to 1:2.4, preferably within the range 1:1.6 to 1:2.0. The amino-formaldehyde resins are usually used in combination with about 1 to 5 per cent by weight of a curing agent, as dry on dry resin.

Unlike phenolic resins and ketone resins, such as acetone-formaldehyde resin, amino-formaldehyde resins are cured under acid conditions, usually at a pH within the range 1—3, and acids, acid salts or salts which form acids with formaldehyde are used as curing agents. As examples of such curing agents can be mentioned citric acid, maleic acid, aluminium sulphate, ammonium chloride, ammonium sulphate etc. In the method of the invention a liquid curing agent is used, i.e. an aqueous solution of the curing agent.

According to the invention the bonding is carried out in the presence of a ketone-formaldehyde resin. This is used in comparatively small amounts. At least 1 per cent by weight of dry ketone-formaldehyde resin, based on the adhesive, should be used to obtain the desired effect. Amounts within the range 1 to 35 per cent by weight are suitably used, and it is preferred to use amounts within the range 2 to 10 per cent by weight. Any ketone which with formaldehyde gives a condensate having sufficient water solubility can in principle be used for the ketone-formaldehyde resin. Dialkyl-ketones having lower alkyl groups in the chains are preferred and suitably such having 1 to 6 carbon atoms. Suitable ketones are e.g. diethyl-ketone, methylethylketone and dimethylketone (acetone). Acetone-formaldehyde resin is preferably used. The mole ratio of formaldehyde to ketone should suitably be within the range 1.5:1 to 4.5:1. The ketone-formaldehyde resin does not function as an adhesive at the bonding as it is not cured under the conditions used for curing amino-formaldehyde resin. The presence of the ketone-formaldehyde resin increases the penetration of the amino-formaldehyde adhesive generally, and gives a favourable wetting effect. Compact wood materials and materials which are difficult to bond can with very satisfactory results be bonded with amino-formaldehyde adhesives when using a ketone-formaldehyde resin at the bonding. Also old wood surfaces can be bonded and sufficient wetting of such surfaces be obtained to give the final bonded product an acceptable strength. The method of the invention is further very valuable for use in high-frequency bonding and here gives an increased penetration of the adhesive. The ketone resins are not, to any extent worth mentioning, negatively influenced by the acid chemicals generally used at bonding with amino-formaldehyde adhesives.

The method of the invention can be used to produce composite products of wood and wood based materials such as particle boards. As examples of more specific fields of utilization can be mentioned bonding of laminated parquet flooring wherein e.g. pine sheets are bonded to a hard sort of wood, such as oak, or a pine layer is bonded to an oxidized pine veneer, and veneering of particle board.

The ketone resin shall be present at the bonding and it can thus be mixed into an adhesive-curing agent composition before this is applied. In methods wherein the adhesive and the curing agent are applied separately the ketone resin can be mixed with either the liquid adhesive or the liquid curing agent before applying. When bonding with amino-formaldehyde resins these are generally used as aqueous solutions having a dry content of about 60 to 70 per cent by weight, while the curing agent compositions generally has an active substance content of 10 to 25 per cent by weight. In addition to the active curing agent the liquid curing agent composition may also contain buffering substances or other conventional additives. The ketone resin is also used in the form of an aqueous solution and this suitably has a dry content of about 30 to about 70 per cent by weight. Use of all the components in the form of aqueous solutions means that there will not be any problems in obtaining a good distribution of the ketone resin.

It is preferred that the present method is employed in separate application of adhesive and curing agent, i.e. in bonding techniques wherein the curing agent is separately applied to one of the surfaces to be bonded while the amino-formaldehyde resin is applied separately to the other surface or on top of the curing agent. It is consequently preferred to mix the ketone resin either in the adhesive or in the curing agent, and preferably the ketone resin is mixed into the curing agent.

As mentioned earlier, the present method of bonding is especially valuable for bonding oxidized wood materials and for bonding using high-frequency heating. Bonding of oxidized wood material and high-frequency bonding are thus two preferred embodiments of the present invention.

When the ketone resin is mixed in the adhesive, the adhesive composition comprises an amino-formaldehyde resin and at least 1 per cent by weight of a ketone-formaldehyde resin, calculated as dry on dry amino-formaldehyde resin. For 100 parts of a 100% amino-formaldehyde resin the adhesive composition suitably contains 1 to 35 part of ketone-formaldehyde resin (100%), 40 to 70 parts of water and 0 to 5 parts of filler and/or other optional additives.

It is preferred that the ketone-formaldehyde resin is applied to the joint admixed in the curing agent and the invention also relates to a curing agent composition for use in the bonding of wood and wood based materials.

The curing agent composition comprises a curing agent for amino-formaldehyde resin, i.e. an acid, an acid salt on a salt which will form an acid with formaldehyde, and at least 20 per cent by weight of a ketone-formaldehyde resin, calculated as dry on dry curing agent. As an example of a suitable curing agent composition containing ketone-formaldehyde resin can be mentioned such a composition which for 100 parts of dry curing agent contains 20 to 40 parts of ketone-formaldehyde resin (100%), 300 to 400 parts of water and 5 to 15 parts of a buffering substance and/or other optional additives.

In the curing agent composition the ketone-formaldehyde resin is preferably an acetone-formaldehyde resin.

The invention is further illustrated in the following examples. Parts and per cent relates to parts by weight and per cent by weight respectively unless otherwise stated.

Example 1

Veneer of pine were bonded to a substrate of pine layers using urea-formaldehyde resin and curing agent applied separately.

The curing agent composition was a 25% water solution of aluminium sulphate and citric acid which was applied on the veneer in an amount of 15—20 g/m². On top of the curing agent layer a 67% urea-formaldehyde resin was then spread in an amount of about 150 g/m². The pine veneer was then pressed against the pine substrate in a hot press for 1.5 minutes at 100°C. Test pieces were cut from the obtained composite materials and their strength was examined by wood failure tests. The tests were made both for a curing composition as above and for the same curing composition containing 35 per cent by weight of a 60% acetone resin.

At the wood failure test the amount of wood fibres remaining on the veneer is determined. A higher amount of fibres indicates that the breakage occurs in the wood to a greater extent than in the adhesive joint and thus a better joint strength.
Amount of fibres when acetone resin was added: 40—70%.
Amount of fibres when acetone resin was not added: 0—20%.


Example 2

A parquet floor construction was produced by bonding dry oak and pine substrate using urea-formaldehyde resin and curing agent separately applied.

The curing agent composition was a water solution of aluminium sulphate and citric acid, about 25%, which was applied to the pine laminate in an amount of 15 to 20 g/m². On top of the layer of curing agent a 70% urea-formaldehyde resin was then spread in an amount of 130 g/m². The oak layer was put on top and the materials were pressed together under application of high-frequency heating.

Tests were made both with a curing composition as above and the same composition containing 20 per cent by weight of a 60% acetone resin.

Test pieces from the produced parquet construction were subjected to wood failure tests. Amount of wood fibres when acetone resin was added: 80—100%.
Amount of wood fibres when acetone resin was not added: 40—70%.

## Claims

1. A method for bonding wood and wood based materials using amino-formaldehyde resin and a curing agent which is an acid, an acid salt or a salt which forms an acid with formaldehyde, characterized in that the bonding is carried out under acid conditions in the presence of at least 1 per cent by weight of a ketone-formaldehyde resin, calculated as dry on dry amino-formaldehyde resin.

2. A method according to claim 1, characterized in that the bonding is carried out in the presence of 1 to 35 per cent by weight of ketone-formaldehyde resin.

3. A method according to claim 2, characterized in that the bonding is carried out in the presence of 2 to 10 per cent by weight of ketone-formaldehyde resin.

4. A method according to claim 1, 2 or 3, characterized in that the ketone-formaldehyde resin is an acetone-formaldehyde resin.

5. A method according to any of the preceding claims, characterized in that the ketone resin is mixed into the curing agent before the bonding.

6. A method according to claim 1 to 4, characterized in that the ketone resin is mixed into the amino-formaldehyde resin before the bonding.

7. A curing agent composition for use in bonding of wood and wood based materials, characterized in that the composition comprises a curing agent which is an acid, an acid salt or a salt which forms an acid with formaldehyde and at least 20 per cent by weight of a ketone-formaldehyde resin, as dry on dry curing agent.

8. A curing agent composition according to claim 7, characterized in that the ketone-formaldehyde resin is acetone-formaldehyde resin.

## Revendications

1. Procédé de collage de bois et de produits à base de bois au moyen d'une résine amino-formaldéhyde et d'un agent durcissant, ce dernier étant un acide, un sel acide ou un sel formant un acide avec le formaldéhyde, caractérisé en ce que le collage est effectué dans des conditions acides en présence d'au moins 1% en poids d'une résine cétone-formaldéhyde, calculé à l'état sec sur la résine amino-formaldéhyde sèche.

2. Procédé selon la revendication 1 caractérisé en ce que le collage est effectué en présence de 1 à 35% en poids de résine cétone-formaldéhyde.

3. Procédé selon la revendication 2 caractérisé en ce que le collage est effectué en présence de 2 à 10% en poids de résine cétone-formaldéhyde.

4. Procédé selon l'une quelconque des revendications 1 à 3, caractérisé en ce que la résine cétone-formaldéhyde est une résine acétone-formaldéhyde.

5. Procédé selon l'une quelconque des revendications 1 à 4 caractérisé en ce que la résine cétonique est mélangée à l'agent durcissant avant le collage.

6. Procédé selon l'une quelconque des revendications 1 à 4, caractérisé en ce que la résine cétonique est mélangée à la résine amino-formaldéhyde avant le collage.

7. Composition d'agent durcissant pour l'utilisation pour le collage de bois et de produits à base de bois, caractérisé en ce que la composition comprend un agent durcissant qui est un acide, un sel acide ou un sel formant un acide avec du formaldéhyde et au moins 20% en poids d'une résine cétone-formaldéhyde calculés à l'état sec sur l'agent durcissant sec.

8. Composition d'agent durcissant selon la revendication 7, caractérisé en ce que la résine cétone-formaldéhyde est la résine acétone-formaldéhyde.

## Patentansprüche

1. Eine Methode zum Verleimen von Holz und Materialien auf Holzbasis unter Verwendung von Amino-Formaldehydharz und einem Härtungsmittel, das eine Säure, ein saures Salz oder ein Salz, welches mit Formaldehyd eine Säure bildet, ist, dadurch gekennzeichnet, daß das Verkleben unter sauren Bedingungen in Anwesenheit von wenigstens 1 Gew.% eines Keton-Formaldehydharzes, berechnet als Trockensubstanz, bezogen auf trockenes Amino-Formaldehydharz, durchgeführt wird.

2. Methode gemäß Anspruch 1, dadurch gekennzeichnet, daß das Verkleben in Anwesenheit von 1 bis 35 Gew.% des Keton-Formaldehydharzes erfolgt.

3. Methode gemäß Anspruch 2, dadurch gekennzeichnet, daß das Verkleben in Gegen-

7

8

wart von 2 bis 10 Gew.% des Keton-Formaldehydharzes erfolgt.

4. Methode gemäß Anspruch 1, 2 oder 3, dadurch gekennzeichnet, daß das Keton-
Formaldehydharz ein Aceton-Formaldehydharz
ist.

5. Methode gemäß einem der vorher-
gehenden Ansprüche, dadurch gekennzeich-
net, daß das Ketonharz in das Härtungsmittel
vor dem Verkleben eingemischt wird.

6. Method gemäß Anspruch 1 bis 4, dadurch gekennzeichnet, daß das Ketonharz in
das Amino-Formaldehydharz vor der Verklebung eingemischt wird.

7. Eine Härtungsmittel-Zusammensetzung
zur Verwendung beim Verkleben von Holz und
Materialien auf Holzbasis, dadurch gekennzeichnet, daß die Zusammensetzung umfaßt:
ein Härtungsmittel, das eine Säure, ein saures
Salz oder ein Salz, das mit Formaldehyd eine
Säure bildet, ist, und wenigstens 20 Gew.%
eines Keton-Formaldehydharzes, als Trockensubstanz, bezogen auf das trockene Härtungsmittel.

8. Eine Härtungsmittel-Zusammensetzung
gemäß Anspruch 7, dadurch gekennzeichnet,
daß das Keton-Formaldehydharz Aceton-
Formaldehydharz ist.